# EUROPEAN PATENT APPLICATION

(11) **EP 4 852 517 A1**
(43) Date of publication of application: **09.12.2026**
(21) Application number: 24921086.5
(22) Date of filing: 04.02.2024
(51) Int. Cl.: H04W 36/00

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2024/075859
(87) International publication number: WO 2025/161033

(57) **Abstract**

The present disclosure relates to a communication method, a terminal, a network device, and a storage medium. The communication method comprises: receiving first information sent by a network device, the first information being used for instructing a terminal to redirect from a terrestrial network to a non-terrestrial network. The present disclosure solves the current problem that redirection to a non-terrestrial network cannot be achieved due to factors such as different satellite orbit altitudes and differences in functions supported by satellite cells of different types.

## Description

### FIELD

The present disclosure relates to the field of communication technology, and particularly to a communication method, a terminal, a network device, and a storage medium.

### BACKGROUND

Currently, the 3rd generation partnership project (3GPP) has standardized the internet of things network technology node (IoT NTN) and the new radio network technology node (NR NTN).

### SUMMARY

Due to different altitudes of satellite orbits and differences in functions supported by different types of satellite cells, it is currently impossible to support a terminal to be redirected from a non-terrestrial network to another non-terrestrial network.

Embodiments of the present disclosure provide a communication method, a terminal, a network device, and a storage medium.

According to a first aspect of embodiments of the present disclosure, there is provided a communication method, including: receiving first information sent from a network device, in which the first information is used to indicate the terminal to redirect from a terrestrial network to a non-terrestrial network.

According to a second aspect of embodiments of the present disclosure, there is provided a communication method, including: sending first information to a terminal, in which the first information is used to indicate the terminal to redirect from a terrestrial network to a non-terrestrial network.

According to a third aspect of embodiments of the present disclosure, there is provided a communication method, including: sending, by a network device, first information to a terminal, in which the first information is used to indicate the terminal to redirect from a terrestrial network to a non-terrestrial network; and receiving, by the terminal, the first information.

According to a fourth aspect of embodiments of the present disclosure, there is provided a terminal, including: a transceiver module configured to receive first information sent from a network device, in which the first information is used to indicate the terminal to redirect from a terrestrial network to a non-terrestrial network.

According to a fifth aspect of embodiments of the present disclosure, there is provided a network device, including: a transceiver module configured to send first information to a terminal, in which the first information is used to indicate the terminal to redirect from a terrestrial network to a non-terrestrial network.

According to a sixth aspect of embodiments of the present disclosure, there is provided a terminal, including: one or more processors, in which the terminal is configured to perform the communication method according to the first aspect and any one of the implementations of the first aspect.

According to a seventh aspect of embodiments of the present disclosure, there is provided a network device, including: one or more processors, in which the network device is configured to perform the communication method according to the second aspect and any one of the implementations of the second aspect.

According to an eighth aspect of embodiments of the present disclosure, there is provided a communication system, including: a terminal configured to implement the communication method according to the first aspect and any one of the implementations of the first aspect; and a network device configured to implement the communication method according to the second aspect and any one of the implementations of the second aspect.

According to a ninth aspect of embodiments of the present disclosure, there is provided a storage medium storing instructions that, when executed on a communication device, cause the communication device to perform the communication method according to the first aspect and any one of the implementations of the first aspect, or according to the second aspect and any one of the implementations of the second aspect.

With the present disclosure, the first information sent from the network device is received to indicate the terminal to redirect from the terrestrial network to the non-terrestrial network. That is, the terminal may be redirected to the non-terrestrial network in a case of receiving the first information, solving the current problem that redirection to the non-terrestrial network cannot be performed due to reasons such as different altitudes of satellite orbits and differences in functions supported by different types of satellite cells.

### BRIEF DESCRIPTION OF THE DRAWINGS

In order to illustrate the technical solutions of embodiments of the present disclosure in a clearer manner, the drawings required for the description of the embodiments will be described below. The following drawings merely relate to some embodiments of the present disclosure, but shall not be construed as limiting the scope of the present disclosure.
FIG. 1 is a schematic diagram illustrating an architecture of a communication system according to an embodiment of the present disclosure.
FIG. 2 is a schematic interaction diagram of a communication method according to an embodiment of the present disclosure.
FIG. 3a is a flowchart of a communication method according to an embodiment of the present disclosure.
FIG. 3b is a flowchart of a communication method according to an embodiment of the present disclosure.
FIG. 4 is a flowchart of a communication method according to an embodiment of the present disclosure.
FIG. 5 is a schematic interaction diagram of a communication method according to an embodiment of the present disclosure.
FIG. 6a is a block diagram of a terminal according to an embodiment of the present disclosure.
FIG. 6b is a block diagram of a network device according to an embodiment of the present disclosure.
FIG. 7a is a block diagram of a communication device according to an embodiment of the present disclosure.
FIG. 7b is a block diagram of a chip according to an embodiment of the present disclosure.

### DETAILED DESCRIPTION

Embodiments of the present disclosure provide a communication method, a terminal, a network device, and a storage medium.

In a first aspect, embodiments of the present disclosure provide a communication method, including: receiving first information sent from a network device, in which the first information is used to indicate a terminal to redirect from a terrestrial network to a non-terrestrial network.

In the above embodiments, the first information sent from the network device is received to indicate the terminal to redirect from the terrestrial network to the non-terrestrial network. That is, the terminal may be redirected to the non-terrestrial network in a case of receiving the first information, solving the current problem that redirection to the non-terrestrial network cannot be performed due to reasons such as different altitudes of satellite orbits and differences in functions supported by different types of satellite cells.

In some optional embodiments of the first aspect, the first information is carried by at least one of: redirected carrier information; system information; or a radio resource control (RRC) message.

In the above embodiments, the first information may be carried by the redirected carrier information, the system information, the RRC message and the like, saving signaling consumption.

In some optional embodiments of the first aspect, the first information further indicates related information of the non-terrestrial network.

In the above embodiments, the first information may further indicate related information of the non-terrestrial network, such that the terminal may be efficiently redirected to the non-terrestrial network.

In some optional embodiments of the first aspect, the related information of the non-terrestrial network includes at least one of: satellite ephemeris information; related information of timing advance (TA); validity time information of satellite ephemeris information; frequency information; a cell identifier; a satellite identifier; antenna information; or information indicating a service start time of a non-terrestrial network neighboring cell.

In the above embodiments, the related information of the non-terrestrial network may include at least one of the above items, indicating the terminal to be better redirected to the non-terrestrial network.

In some optional embodiments of the first aspect, the method further includes: obtaining satellite ephemeris information from system information; and redirecting to the non-terrestrial network based on the satellite ephemeris information.

In the above embodiments, in a case of receiving the first information used to indicate the terminal to redirect from the terrestrial network to the non-terrestrial network, the terminal may obtain the satellite ephemeris information from the system information, and redirect to the non-terrestrial network based on the satellite ephemeris information. That is, there is no need for the first information to indicate other information, which may save the resource, realize redirection to the non-terrestrial network, and improve communication efficiency.

In some optional embodiments of the first aspect, the method further includes at least one of: redirecting to a corresponding cell based on the related information of the non-terrestrial network; redirecting to a corresponding satellite based on the related information of the non-terrestrial network; or redirecting to a corresponding frequency based on the related information of the non-terrestrial network.

In the above embodiments, in a case where the related information of the non-terrestrial network does not include the satellite ephemeris information, the terminal may obtain the corresponding satellite ephemeris information from the system information based on the related information of the non-terrestrial network, and redirect to the non-terrestrial network based on the satellite ephemeris information, realizing redirection to the non-terrestrial network and improving communication efficiency.

In some optional embodiments of the first aspect, the RRC message includes any one of: a narrowband Internet of Things RRC connection release message; a narrowband Internet of Things RRC early data complete message; a RRC connection release message; or a RRC early data complete message.

In the above embodiments, the first information may be carried by at least one of the above RRC messages, realizing efficient redirection to the non-terrestrial network and improving communication efficiency.

In some optional embodiments of the first aspect, the method further includes: in response to a failure to redirect to a satellite or a cell, re-redirecting to another satellite different from the satellite or another cell different from the cell on the frequency information of the non-terrestrial network.

In the above embodiments, since the first information may indicate the frequency information, in a case where the redirection fails, the terminal may be redirected to another satellite or another cell on the frequency, improving communication efficiency.

In a second aspect, embodiments of the present disclosure provide a communication method, including: sending first information to a terminal, in which the first information is used to indicate the terminal to redirect from a terrestrial network to a non-terrestrial network.

In some optional embodiments of the second aspect, the first information is carried by at least one of: redirected carrier information; system information (SIB); or a radio resource control (RRC) message.

In some optional embodiments of the second aspect, the first information further indicates related information of the non-terrestrial network.

In some optional embodiments of the second aspect, the related information of the non-terrestrial network includes at least one of: satellite ephemeris information; related information of timing advance (TA); validity time information of satellite ephemeris information; frequency information; a cell identifier; a satellite identifier; antenna information; or information indicating a service start time of a non-terrestrial network neighboring cell.

In some optional embodiments of the second aspect, the RRC message includes any one of: a narrowband Internet of Things RRC connection release message; a narrowband Internet of Things RRC early data complete message; a RRC connection release message; or a RRC early data complete message.

In a third aspect, embodiments of the present disclosure provide a communication method, including: sending, by a network device, first information to a terminal, in which the first information is used to indicate the terminal to redirect from a terrestrial network to a non-terrestrial network; and receiving, by the terminal, the first information.

In some optional embodiments of the third aspect, the first information is carried by at least one of: redirected carrier information; system information; or a radio resource control (RRC) message.

In some optional embodiments of the third aspect, the first information further indicates related information of the non-terrestrial network.

In some optional embodiments of the third aspect, the related information of the non-terrestrial network includes at least one of: satellite ephemeris information; related information of timing advance (TA); validity time information of satellite ephemeris information; frequency information; a cell identifier; a satellite identifier; antenna information; or information indicating a service start time of a non-terrestrial network neighboring cell.

In some optional embodiments of the third aspect, the terminal further includes a processing module configured to: obtain satellite ephemeris information from system information; and redirect to the non-terrestrial network based on the satellite ephemeris information.

In some optional embodiments of the third aspect, the processing module is further configured to perform at least one of: redirecting to a corresponding cell based on the related information of the non-terrestrial network; redirecting to a corresponding satellite based on the related information of the non-terrestrial network; or redirecting to a corresponding frequency based on the related information of the non-terrestrial network.

In some optional embodiments of the third aspect, the RRC message includes any one of: a narrowband Internet of Things RRC connection release message; a narrowband Internet of Things RRC early data complete message; a RRC connection release message; or a RRC early data complete message.

In some optional embodiments of the third aspect, the processing module is further configured to: in response to a failure to redirect to a satellite or a cell, re-redirect to another satellite different from the satellite or another cell different from the cell on the frequency information of the non-terrestrial network.

In a fourth aspect, embodiments of the present disclosure provide a terminal, including: a transceiver module configured to receive first information sent from a network device, in which the first information is used to indicate the terminal to redirect from a terrestrial network to a non-terrestrial network.

In some optional embodiments of the fourth aspect, the first information is carried by at least one of: redirected carrier information; system information (SIB); or a radio resource control (RRC) message.

In some optional embodiments of the fourth aspect, the first information further indicates related information of the non-terrestrial network.

In some optional embodiments of the fourth aspect, the related information of the non-terrestrial network includes at least one of: satellite ephemeris information; related information of timing advance (TA); validity time information of satellite ephemeris information; frequency information; a cell identifier; a satellite identifier; antenna information; or information indicating a service start time of a non-terrestrial network neighboring cell.

In some optional embodiments of the fourth aspect, the RRC message includes any one of: a narrowband Internet of Things RRC connection release message; a narrowband Internet of Things RRC early data complete message; a RRC connection release message; or a RRC early data complete message.

In a fifth aspect, embodiments of the present disclosure provide a network device, including: a transceiver module configured to send first information to a terminal, in which the first information is used to indicate the terminal to redirect from a terrestrial network to a non-terrestrial network.

In a sixth aspect, embodiments of the present disclosure provide a terminal, including: one or more processors, in which the terminal is configured to perform the communication method according to the first aspect and any one of the implementations of the first aspect.

In a seventh aspect, embodiments of the present disclosure provide a network device, including: one or more processors, in which the network device is configured to perform the communication method according to the second aspect and any one of the implementations of the second aspect.

In an eighth aspect, embodiments of the present disclosure provide a communication system, including: a terminal configured to implement the communication method according to the first aspect and any one of the implementations of the first aspect; and a network device configured to implement the communication method according to the second aspect and any one of the implementations of the second aspect.

In a ninth aspect, embodiments of the present disclosure provide a storage medium storing instructions that, when executed on a communication device, cause the communication device to perform the communication method according to the first aspect and any one of the implementations of the first aspect, or according to the second aspect and any one of the implementations of the second aspect.

In a tenth aspect, embodiments of the present disclosure provide a program product that, when executed by a communication device, causes the communication device to perform the method described in the optional implementations of the first aspect or the second aspect.

In an eleventh aspect, embodiments of the present disclosure provide a computer program that, when run on a computer, causes the computer to perform the method described in the optional implementations of the first aspect or the second aspect.

In a twelfth aspect, embodiments of the present disclosure provide a chip or a chip system. The chip or chip system includes a processing circuit configured to perform the method described in the optional implementations of the first aspect or the second aspect.

As may be appreciated, the terminal, access network device, first network element, other network elements, core network device, communication system, storage medium, program product, computer program, chip or chip system involved in embodiments of the present disclosure are all used to perform the methods set forth in embodiments of the present disclosure. Therefore, for the beneficial effects that may be achieved by them, reference may be made to the beneficial effects in the corresponding methods, which are not repeated here.

Embodiments of the present disclosure provide a communication method, a terminal, a network device, and a storage medium. In some embodiments, terms such as communication method and method for processing information, method for communication and the like may be used interchangeably; terms such as communication apparatus and apparatus for processing information, and apparatus for communication and the like may be used interchangeably; terms such as system for processing information, communication system and the like may be used interchangeably.

Embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In embodiments of the present disclosure, unless otherwise specified and in case of no logical conflict, the terms and/or descriptions among the embodiments are consistent and may be referenced to each other, and technical features in different embodiments may be combined to form new embodiments according to their intrinsic logical relationships.

The terms used in embodiments of the present disclosure are for the purpose of describing specific embodiments only, and are not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, "a plurality of" refers to two or more.

In some embodiments, terms such as "at least one of", "one or more", "a plurality of", "multiple", may be used interchangeably.

In some embodiments of the present disclosure, expressions such as "at least one of A, B", "A and/or B", "A in a case and B in another", "A in response to a case and B in response to another case" may include the following technical solutions depending on the situation: A is executed regardless of B, i.e., in some embodiments, A; B is executed regardless of A, i.e., in some embodiments, B; A and B are selectively executed, i.e., in some embodiments, one of A and B is selected for execution; A and B are executed, i.e., in some embodiments, A and B. The same applies when there are more branches such as A, B, and C.

In some embodiments of the present disclosure, expressions such as "A or B" may include the following technical solutions depending on the situation: A is executed regardless of B, i.e., in some embodiments, A; B is executed regardless of A, i.e., in some embodiments, B; A and B are selectively executed, i.e., in some embodiments, one of A and B is selected for execution. The same applies when there are more branches such as A, B, and C.

The prefix words such as "first" and "second" in embodiments of the present disclosure are only for distinguishing different described objects, and do not impose limitations on the positions, orders, priorities, quantities, contents, etc. of the described objects. For description of the described objects, reference may be made to the description of the context in the claims or the embodiments, and unnecessary restrictions should not be constituted due to the use of the prefix words. For example, if the described object is a "field", the ordinal numbers before the "field" in the "first field" and the "second field" do not limit the position or order between the "fields", and "first" and "second" do not limit whether the "fields" modified by them are in the same message, nor do they limit the order of the "first field" and the "second field". For another example, if the described object is "rank", the ordinal numbers before "rank" in "first rank" and "second rank" do not limit the priority between "rank". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the content thereof may be the same or different.

In some embodiments, terms such as "including A", "containing A", "indicating A", "carrying A", may be interpreted as directly carrying A, or may be interpreted as indirectly indicating A.

In some embodiments, terms such as "in response to", "in response to determining", "in a case where", "when", "upon", "if" and the like may be used interchangeably.

In some embodiments, terms such as "greater than", "greater than or equal to", "not smaller than", "more than", "more than or equal to", "not less than", "higher", "higher than or equal to", "not lower than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "subject" and the like in some cases.

In some embodiments, the "network" may be interpreted as an apparatus included in the network, for example, an access network device, a core network device and the like.

In some embodiments, the "access network device (AN device)" may also be referred to as "radio access network device (RAN device)", "base station (BS)", "radio base station", "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, the "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

Currently, the following description applies to redirection:
In a case of receiving a radio resource control connection release (RRCConnectionRelease) message or a radio resource control early data complete (RRCEarlyDataComplete) message to move a UE to a radio resource control idle state (RRC_IDLE) or radio resource control inactive state (RRC_INACTIVE), if the RRCConnectionRelease message or the RRCEarlyDataComplete message includes redirected carrier information (redirectedCarrierInfo), the UE shall attempt to camp on a suitable cell based on the redirectedCarrierInfo.

That is, in a case where the UE enters the RRC idle state or the RRC inactive state, it needs to camp on the suitable cell based on information of the redirectedCarrierInfo.

For the redirectedCarrierInfo, for example, it may include new radio redirected carrier information (CarrierInfoNR), through which the radio access technology (RAT) that the UE is redirected to may be determined.

Furthermore, during the redirection, the network device also provides messages such as a cell information list (cellInfoList) to provide system information of the neighboring cell for redirection.

Currently, however, for NR NTN, there are satellites at different orbital altitudes, such as a low earth orbit (LEO) satellite, a medium earth orbit (MEO) satellite, a geostationary earth orbit (GEO) satellite and the like. There are also different types of cells such as a quasi earth fixed cell and an earth moving cell. The quasi earth fixed cell refers to an NTN solution in which the cell is fixed at a certain position on the Earth permanently or within a first time interval. The earth moving cell refers to an NTN solution where a satellite cell moves continuously on the Earth. These different types of NR NTN cells differ in their supported functions, and also provide different user experiences for the UE. Therefore, the current E-UTRAN TN redirection may not be able to well support redirection to the NR NTN.

Therefore, the present disclosure provides a communication method. The first information sent from the network device is received to indicate the terminal to redirect from the terrestrial network to the non-terrestrial network. That is, the terminal may be redirected to the non-terrestrial network in a case of receiving the first information, solving the current problem that redirection to the non-terrestrial network cannot be performed due to reasons such as different altitudes of satellite orbits and differences in functions supported by different types of satellite cells.

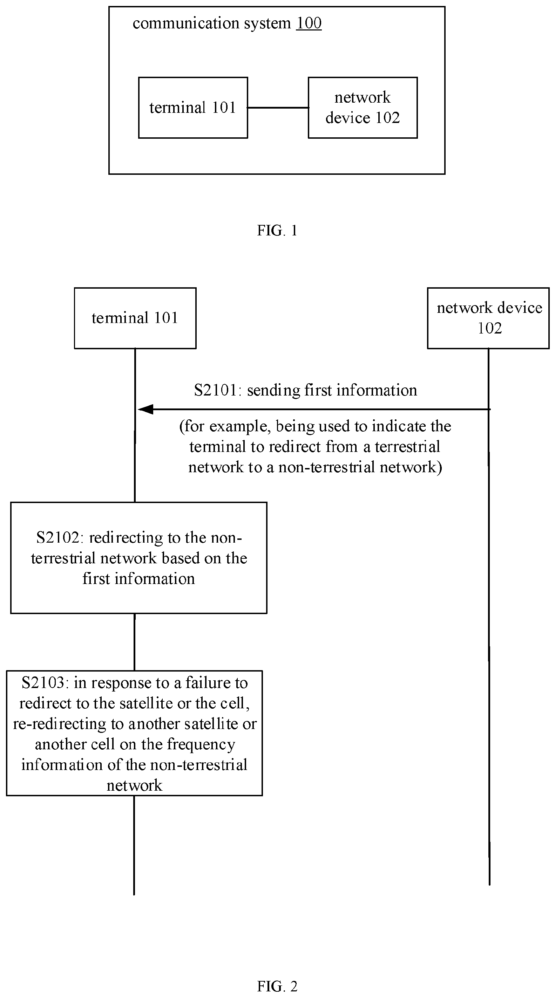

FIG. 1 is a schematic diagram illustrating an architecture of a communication system according to an embodiment of the present disclosure.

As shown in FIG. 1, a communication system 100 includes a terminal 101 and a network device 102.

In some embodiments, the terminal 101 may include at least one of, but is not limited to: a mobile phone, a wearable device, an Internet of Things device, a vehicle with a communication function, a smart vehicle, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 may include at least one of an access network device or a core network device.

In some embodiments, the access network device 102 is, for example, a node or device that provides a terminal with access to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a Wi-Fi system.

In some embodiments, the technical solutions of the present disclosure may be applied to an Open RAN architecture. Moreover, an interface between or within the access network devices according to embodiments of the present disclosure may be changed to an internal interface of an Open RAN, and the flow and information interaction between the internal interfaces may be implemented by software or programs.

In some embodiments, the access network device may include a central unit (CU) and a distributed unit (DU), in which the CU may also be referred to as a control unit, and the protocol layer of the access network device may be separated by adopting the CU-DU structure, some functions of the protocol layer are centrally controlled by the CU, and some or all remaining functions of the protocol layer are distributed in the DU, and the DU is centrally controlled by the CU, but the present disclosure is not limited to this.

In some embodiments, the core network device may be one device including one or more network elements, or may be a plurality of devices or a group of devices, each of which includes all or part of the one or more network elements. The network element may be virtual or physical. The core network may include at least one of an evolved packet core (EPC), a 5G core network (5GCN), or a next generation core (NGC).

As may be appreciated, the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solutions provided by embodiments of the present disclosure are applicable to similar technical problems.

The following embodiments of the present disclosure may be applied to the communication system 100 illustrated in FIG. 1 or a part of the entities of the communication system 100, but the present disclosure is not limited to this. The entities shown in FIG. 1 are illustrative, and the communication system may include all or part of the entities shown in FIG. 1, or other entities other than those shown in FIG. 1. The number and form of the entities are arbitrary, the connection relationship between the entities is an example, the entities may not be connected or may be connected, and the connection may be in any form, including direct connection or indirect connection, and including wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

FIG. 2 is a schematic interaction diagram of a communication method according to an embodiment of the present disclosure. As shown in FIG. 2, the embodiment of the present disclosure relates to a communication method, which is performed by the communication system 100. The method includes the following steps.

**In step S2101**, a network device 102 sends first information to a terminal 101.

In some embodiments, the terminal 101 receives the first information sent from the network device 102.

In some embodiments, the first information is used to indicate the terminal to redirect from a terrestrial network to a non-terrestrial network. That is, in a case of receiving the first information, the terminal may redirect to the non-terrestrial network.

In some embodiments, the first information is carried by at least one of: redirected carrier information; system information; or a radio resource control (RRC) message.

Optionally, the first information may be sent to the terminal in the redirected carrier information, in which the redirected carrier information is redirectedCarrierInfo. That is, in a case where the redirected carrier information indicates a cell suitable for the terminal to camp on, it indicates that the terminal may redirect to the non-terrestrial network.

Optionally, the first information may be sent to the terminal in a system information block (SIB). For example, the SIB may be an SIB5. Of course, the above description is only an example of the present disclosure, and the first information may also be carried by other SIBs, which is not limited in the present disclosure.

Optionally, the first information may be sent to the terminal in the RRC message. For example, the RRC message may include system information of the non-terrestrial network neighboring cell, and the system information of the non-terrestrial network neighboring cell may serve as the first information to indicate the terminal to redirect from the non-terrestrial network to the terrestrial network. Alternatively, the system information of the non-terrestrial network neighboring cell may include the first information used to indicate the terminal to redirect from a non-terrestrial network to another non-terrestrial network.

In some embodiments, the RRC message may include at least one of: a narrowband Internet of Things RRC connection release message (RRCConnectionRelease-NB); a narrowband Internet of Things RRC early data complete message (RRCEarlyDataComplete-NB); an RRC connection release message; or an RRC early data complete message.

In some embodiments, the first information may further indicate related information of the non-terrestrial network.

In some embodiments, the related information of the non-terrestrial network includes at least one of: satellite ephemeris information; related information of timing advance (TA); validity time information of satellite ephemeris information; frequency information; a cell identifier; a satellite identifier; antenna information; or information indicating a service start time of a non-terrestrial network neighboring cell.

Optionally, the related information of the non-terrestrial network may include satellite ephemeris information. For example, the satellite ephemeris information may be used by the terminal to determine position information of the satellite, further determining a distance between the terminal and the satellite, etc. That is, the satellite ephemeris information may be used by the terminal to redirect to the satellite or a cell of the satellite and the like.

Optionally, the related information of the non-terrestrial network may include the related information of the TA. For example, the related information of the TA may include a common TA parameter, which is used by the terminal to determine the TA.

Optionally, the related information of the non-terrestrial network may include the validity time information of the satellite ephemeris information. For example, the validity time information may be an epoch time or a validity duration. For example, in a case where validity time of the satellite ephemeris information is exceeded, the satellite ephemeris information becomes invalid, and at this time, the satellite ephemeris information may not be used to determine the position information of the terminal and the like. That is, the validity time information of the satellite ephemeris information may determine when the satellite ephemeris information expires, better redirecting to the satellite or the cell of the satellite and the like.

Optionally, the related information of the non-terrestrial network may include the frequency information. For example, the terminal may perform measurement based on the frequency information and redirect to the satellite or the cell on the frequency.

Optionally, the related information of the non-terrestrial network may include the cell identifier. For example, the terminal may redirect to a corresponding cell based on the cell identifier.

Optionally, the related information of the non-terrestrial network may include the satellite identifier. For example, the terminal may redirect to a corresponding satellite or redirect to a cell of the corresponding satellite based on the satellite identifier.

Optionally, the related information of the non-terrestrial network may include the antenna information. For example, the antenna information may include uplink antenna polarization information or downlink antenna polarization information. The antenna polarization information has a significant impact on aspects such as signal transmission quality and a transmission distance. That is, the satellite or cell for redirection may be more accurately determined based on the antenna polarization information.

Optionally, the related information of the non-terrestrial network may include the information indicating a service start time of the non-terrestrial network neighboring cell. For example, the neighboring cell that starts service earliest may be determined for redirection according to the service start time of the non-terrestrial network neighboring cell. That is, the terminal may be redirected better based on the information indicating a service start time of the non-terrestrial network neighboring cell.

In some embodiments, the name of the first information is not limited, and it may be, for example, "indication information", "configuration information" and the like.

**In step S2102**, the terminal 101 redirects to the non-terrestrial network based on the first information.

In some embodiments, in a case where the first information is used to indicate the terminal to redirect from the terrestrial network to the non-terrestrial network, the terminal may obtain the satellite ephemeris information from the system information of a serving cell or a target cell. That is, in a case where the terminal determines to redirect to the non-terrestrial network based on the first information, it may directly obtain the satellite ephemeris information from the system information, and redirect to the non-terrestrial network based on the satellite ephemeris information. For example, the terminal may determine the satellite or the cell for redirection based on the satellite ephemeris information.

In some embodiments, in a case where the first information is used to indicate the terminal to redirect from a non-terrestrial network to another non-terrestrial network, and the first information further indicates the related information of the non-terrestrial network, the terminal may redirect to the non-terrestrial network based on the related information of the non-terrestrial network. For example, the terminal may determine to redirect to the satellite or cell on the frequency based on the frequency information in the related information of the non-terrestrial network. For another example, the terminal may determine to redirect to a satellite corresponding to the satellite identifier or a cell of the corresponding satellite based on the satellite identifier in the related information of the non-terrestrial network. For another example, the terminal may determine to redirect to a cell corresponding to the cell identifier based on the cell identifier in the related information of the non-terrestrial network.

In some embodiments, in a case where the first information is used to indicate the terminal to redirect from a non-terrestrial network to another non-terrestrial network, and the first information further indicates the related information of the non-terrestrial network, if the related information of the non-terrestrial network does not include the satellite ephemeris information, the terminal may obtain corresponding satellite ephemeris information from the system information based on the related information of the non-terrestrial network. For example, in a case where the related information of the non-terrestrial network does not include the satellite ephemeris information but includes the frequency information, the terminal may obtain the ephemeris information of a satellite corresponding to the frequency information from the system information. For another example, in a case where the related information of the non-terrestrial network does not include the satellite ephemeris information but includes the satellite identifier, the terminal may obtain the ephemeris information of a satellite corresponding to the satellite identifier from the system information. For another example, in a case where the related information of the non-terrestrial network does not include the satellite ephemeris information but includes the cell identifier, the terminal may obtain the ephemeris information of a satellite corresponding to the cell identifier from the system information.

**In step S2103**, in response to a failure to redirect to the satellite or the cell, the terminal 101 re-redirects to another satellite or another cell on the frequency information of the non-terrestrial network.

In some embodiments, in a case where the terminal fails to redirect to a certain satellite or a certain cell based on the frequency information in the related information of the non-terrestrial network, the terminal may redirect to another satellite or another cell on the frequency information.

In some embodiments, in a case where the terminal fails to redirect to the satellite based on the satellite identifier of the non-terrestrial network, the terminal may redirect to another satellite or another cell on the frequency information based on the frequency information in the related information of the non-terrestrial network.

In some embodiments, in a case where the terminal fails to redirect to the cell based on the cell identifier of the non-terrestrial network, the terminal may redirect to another satellite or another cell on the frequency information based on the frequency information in the related information of the non-terrestrial network.

The communication method involved in the embodiments of the present disclosure may include at least one of step S2101 to step S2103. For example, step S2101 may be implemented as an independent embodiment, which is not limited in the present disclosure.

In some embodiments, step S2102 and step S2103 are optional, and one or more of these steps may be omitted or replaced in different embodiments.

In some embodiments, reference may be made to other optional implementations recorded before or after the specification corresponding to FIG. 2.

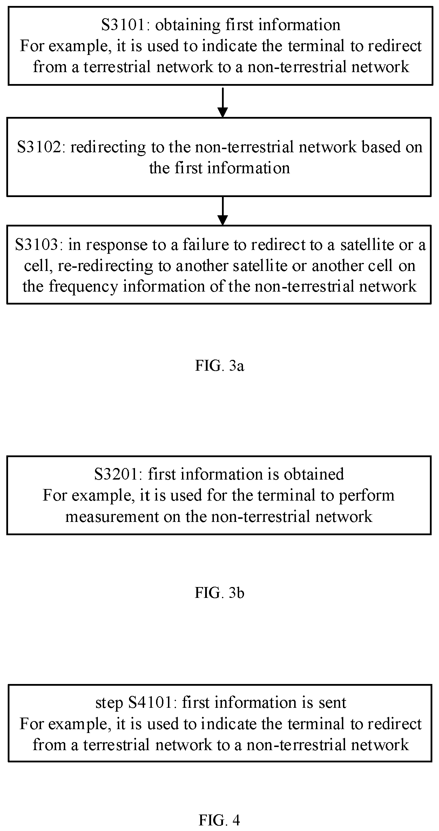

FIG. 3a is a flowchart of a communication method according to an embodiment of the present disclosure. As shown in FIG. 3a, an embodiment of the present disclosure relates to a communication method, which is performed by a terminal 101. The method includes the following steps.

**In step S3101**, first information is obtained.

For the optional implementations of step S3101, reference may be made to the optional implementations of step S2101 in FIG. 2 and other related parts in the embodiments involved in FIG. 2, which are not repeated here.

In some embodiments, the terminal 101 receives the first information sent from a network device 102, which is not limited in the present disclosure, and the terminal may also receive the first information sent from other entities.

In some embodiments, the terminal 101 obtains the first information specified by a protocol.

In some embodiments, the terminal 101 obtains the first information from an upper layer.

In some embodiments, the terminal 101 performs a processing to obtain the first information.

In some embodiments, step S3101 is omitted, the terminal 101 autonomously implements the function indicated by the first information, or the above function is a default function.

**In step S3102**, the terminal redirects to the non-terrestrial network based on the first information.

For the optional implementations of step S3102, reference may be made to the optional implementations of step S2102 in FIG. 2 and other related parts in the embodiments involved in FIG. 2, which are not repeated here.

**In step S3103**, in response to a failure to redirect to a satellite or a cell, the terminal re-redirects to another satellite or another cell on the frequency information of the non-terrestrial network.

For the optional implementations of step S3103, reference may be made to the optional implementations of step S2103 in FIG. 2 and other related parts in the embodiments involved in FIG. 2, which are not repeated here.

FIG. 3b is a flowchart of a communication method according to an embodiment of the present disclosure. As shown in FIG. 3b, an embodiment of the present disclosure relates to a communication method, which is performed by a terminal 101. The method includes the following step.

**In step S3201**, first information is obtained.

For the optional implementations of step S3201, reference may be made to the optional implementations of step S2101 in FIG. 2 and other related parts in the embodiments involved in FIG. 2, which are not repeated here.

In some embodiments, the terminal 101 receives the first information sent from a network device 102, which is not limited in the present disclosure, and the terminal may also receive the first information sent from other entities.

In some embodiments, the terminal 101 obtains the first information specified by a protocol.

In some embodiments, the terminal 101 obtains the first information from an upper layer.

In some embodiments, the terminal 101 performs a processing to obtain the first information.

In some embodiments, step S3201 is omitted, the terminal 101 autonomously implements the function indicated by the first information, or the above function is a default function.

In some embodiments, the first information is carried by at least one of: redirected carrier information; system information (e.g., an SIB); or an RRC message.

In some embodiments, the first information further indicates related information of a non-terrestrial network.

In some embodiments, the related information of the non-terrestrial network includes at least one of: satellite ephemeris information; related information of TA; validity time information of satellite ephemeris information; frequency information; a cell identifier; a satellite identifier; antenna information; or information indicating a service start time of a non-terrestrial network neighboring cell.

In some embodiments, the method further includes: obtaining satellite ephemeris information from system information; and redirecting to the non-terrestrial network based on the satellite ephemeris information.

In some embodiments, in a case where the related information of the non-terrestrial network does not include the satellite ephemeris information, the method further includes: obtaining, from a system, satellite ephemeris information corresponding to the related information of the non-terrestrial network based on the related information of the non-terrestrial network; and redirecting to the non-terrestrial network according to the satellite ephemeris information.

In some embodiments, the RRC message may include at least one of: a narrowband Internet of Things RRC connection release message; a narrowband Internet of Things RRC early data complete message; an RRC connection release message; or an RRC early data complete message.

In some embodiments, the method further includes: in response to a failure to redirect to a satellite or a cell, re-redirecting to another satellite or another cell on the frequency information of the non-terrestrial network.

FIG. 4 is a flowchart of a communication method according to an embodiment of the present disclosure. As shown in FIG. 4, an embodiment of the present disclosure relates to a communication method, which is performed by a network device 102. The method includes the following step.

**In step S4101**, first information is sent.

For the optional implementations of step S4101, reference may be made to the optional implementations of step S2101 in FIG. 2 and other related parts in the embodiments involved in FIG. 2, which are not repeated here.

In some embodiments, the network device 102 sends the first information to a terminal 101, which is not limited in the present disclosure, and the network device may also send the first information to other entities.

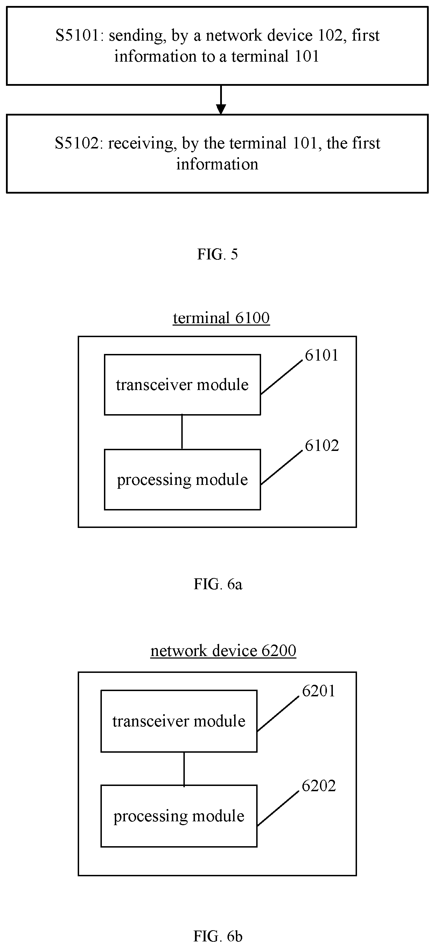

FIG. 5 is a flowchart of a communication method according to an embodiment of the present disclosure. As shown in FIG. 5, an embodiment of the present disclosure relates to a communication method. The method includes the following steps.

**In step S5101**, a network device 102 sends first information to a terminal 101.

For the optional implementations of step S5101, reference may be made to step S2102 in FIG. 2 and other related parts in the embodiments involved in FIG. 2, which are not repeated here.

In some embodiments, the method may include the methods of the above embodiments related to the communication system 100, the terminal 101, the network device 102 and the like, which are not repeated here.

**In step S5102**, the terminal 101 receives the first information.

For the optional implementations of step S5102, reference may be made to step S2103 in FIG. 2 and other related parts in the embodiments involved in FIG. 2, which are not repeated here.

In some embodiments, the method may include the methods of the above embodiments related to the communication system 100, the terminal 101, the network device 102 and the like, which are not repeated here.

The present disclosure provides a method for redirecting an E-UTRAN TN UE to an NR NTN, which is described as follows.

In some embodiments, the method for redirecting the E-UTRAN TN UE to the NR NTN may also be referred to as a communication method.

In some embodiments, a network, such as a base station, sends indication information to a UE, in which the indication information is used for the UE to redirect from the E-UTRAN TN to the NR NTN.

In some embodiments, the indication information may be the first information, and the network may be the network device.

In some embodiments, the indication information is included in redirected carrier information.

In some embodiments, the indication information is information of the NR NTN, including one of:
satellite ephemeris information;
related information of TA;
validity time information of the satellite ephemeris information, such as an epoch time and a validity duration;
frequency information;
a cell identifier (ID);
a satellite ID;
antenna information, such as uplink antenna and/or downlink antenna polarization information; and
information indicating a service start time of a neighboring cell.

In some embodiments, in a case where the indication information only includes the frequency information, or the satellite ID, or a combination of the frequency information and the satellite ID, the UE obtains ephemeris information of a satellite corresponding to the frequency information from system information, or obtains the frequency information corresponding to the satellite ID from system information.

In some embodiments, the indication information may further include system information of an NR NTN cell on an NR NTN frequency/carrier for redirection.

In some embodiments, the system information of the NR NTN cell on the NR NTN frequency/carrier is in a cell information list.

In some embodiments, the indication information is sent via one of:
an RRC message;
RRCConnectionRelease-NB;
RRCEarlyDataComplete-NB;
RRCConnectionRelease;
RRCEarlyDataComplete; and
system information: an SIB5.

In some embodiments, the UE shall camp on a cell corresponding to an indicated satellite based on the indication information.

In some embodiments, based on the indication information, in a case where the UE may not camp on the cell corresponding to the indicated satellite, the UE may attempt to camp on another cell corresponding to a frequency point in the indication information.

FIG. 6a is a block diagram of a terminal according to an embodiment of the present disclosure. As shown in FIG. 6a, the terminal 6100 may include a transceiver module 6101. The transceiver module 6101 is configured to receive first information sent from a network device, in which the first information is used to indicate the terminal to redirect from a terrestrial network to a non-terrestrial network.

In some embodiments, the first information is carried by at least one of: redirected carrier information; system information (e.g., an SIB); or an RRC message.

In some embodiments, the first information further indicates related information of the non-terrestrial network.

In some embodiments, the related information of the non-terrestrial network includes at least one of: satellite ephemeris information; related information of TA; validity time information of satellite ephemeris information; frequency information; a cell identifier; a satellite identifier; antenna information; or information indicating a service start time of a non-terrestrial network neighboring cell.

In some embodiments, the terminal 6100 further includes a processing module 6102 configured to: obtain satellite ephemeris information from system information; and redirect to the non-terrestrial network based on the satellite ephemeris information.

In some embodiments, the processing module 6102 is further configured to perform at least one of: redirecting to a corresponding cell based on the related information of the non-terrestrial network; redirecting to a corresponding satellite based on the related information of the non-terrestrial network; redirecting to a corresponding frequency based on the related information of the non-terrestrial network.

In some embodiments, the RRC message includes at least one of: a narrowband Internet of Things RRC connection release message; a narrowband Internet of Things RRC early data complete message; an RRC connection release message; or an RRC early data complete message.

In some embodiments, the processing module 6102 is further configured to: in response to a failure to redirect to a satellite or a cell, re-redirect to another satellite different from the satellite or another cell different from the cell on the frequency information.

FIG. 6b is a block diagram of a network device according to an embodiment of the present disclosure. As shown in FIG. 6b, a network device 6200 may include a transceiver module 6201. The transceiver module 6201 is configured to send first information to a terminal, in which the first information is used to indicate the terminal to redirect from a terrestrial network to a non-terrestrial network.

In some embodiments, the first information is carried by at least one of: redirected carrier information; system information (e.g., an SIB); or an RRC message.

In some embodiments, the first information further indicates related information of the non-terrestrial network.

In some embodiments, the related information of the non-terrestrial network includes at least one of: satellite ephemeris information; related information of TA; validity time information of satellite ephemeris information; frequency information; a cell identifier; a satellite identifier; antenna information; or information indicating a service start time of a non-terrestrial network neighboring cell.

In some embodiments, the RRC message includes at least one of: a narrowband Internet of Things RRC connection release message; a narrowband Internet of Things RRC early data complete message; an RRC connection release message; or an RRC early data complete message.

In some embodiments, the network device 6200 may further include a processing module 6202 configured to perform corresponding steps.

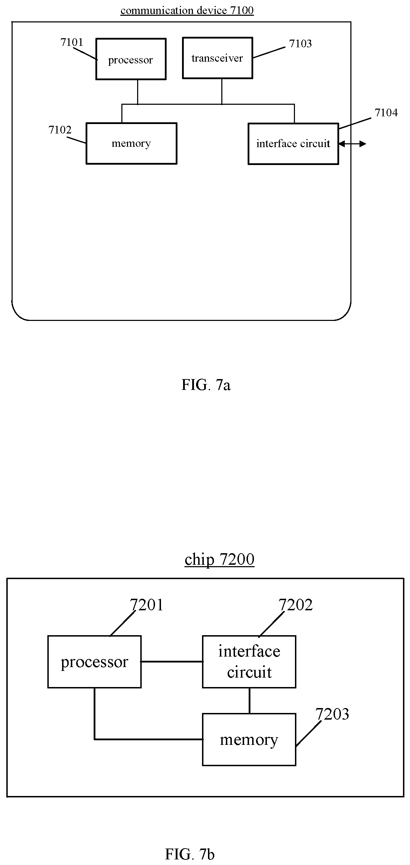

FIG. 7a is a block diagram of a communication device 7100 according to an embodiment of the present disclosure. The communication device 7100 may be a network device, may also be a terminal, may further be a chip, a chip system, a processor or the like that supports the network device to implement any of the foregoing methods, or may be a chip, a chip system, a processor or the like that supports the terminal to implement any of the above methods. Optionally, the network device may be an access network device, a core network device and the like. Optionally, the terminal may be a user equipment and the like. The communication device 7100 may be used to implement the methods described in the above method embodiments, and for details, reference may be made to the descriptions in the above method embodiments.

As shown in FIG. 7a, the communication device 7100 includes one or more processors 7101. The processor 7101 may be a general-purpose processor or a special-purpose processor, for example, a baseband processor or a central processing unit. The baseband processor may be used to process communication protocols and communication data, and the central processing unit may be used to control communication devices, execute programs, and process program data. The communication device 7100 is configured to implement any of the above methods. Optionally, the communication apparatus may be a base station, a baseband chip, a terminal, a terminal chip, a DU or a CU, or the like.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. In a case where the communication device 7100 includes one or more transceivers 7103, the communication steps (for example, step S2101) such as sending and/or receiving steps in the above methods are performed by the transceivers 7103, and other steps are performed by the processor 7101.

In some embodiments, the transceiver may include a receiver and/or a transmitter, which may be separate or integrated. Optionally, terms such as transceiver, transceiver unit, transceiving machine, transceiver circuit and the like may be replaced with each other, terms such as transmitter, transmitting unit, transmitting machine, transmitting circuit and the like may be replaced with each other, and terms such as receiver, receiving unit, receiving machine, receiving circuit and the like may be replaced with each other.

Optionally, the communication device 7100 further includes one or more interface circuits 7104. The interface circuit 7104 is connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 described in the above embodiments may be a network device or a terminal device, but the scope of the communication device 7100 described in the present disclosure is not limited thereto. The structure of the communication device 7100 may not be limited by FIG. 7a. The communication device may be a stand-alone device or may be part of a large device. For example, the communication device may be: 1) a stand-alone integrated circuit (IC), or a chip, or a chip system or subsystem; 2) a set of one or more ICs, optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 7b is a block diagram of a chip according to an embodiment of the present disclosure. In a case where the communication device 7100 may be a chip or a chip system, reference may be made to the block diagram of the chip 7200 shown in FIG. 7b, but it is not limited to this.

The chip 7200 includes one or more processors 7201, and the chip 7200 are configured to perform any of the above methods.

In some embodiments, the chip 7200 further includes one or more interface circuits 7202. Optionally, the interface circuit 7202 is connected to the memory 7203. The interface circuit 7202 may further be configured to receive signals from the memory 7203 or other devices, and the interface circuit 7202 may be configured to send signals to the memory 7203 or other devices. For example, the interface circuit 7202 may read instructions stored in the memory 7203 and send the instructions to the processor 7201.

In some embodiments, the communication steps (for example, step S2101) such as sending and/or receiving steps in the above methods are performed by the interface circuit 7202, and other steps are performed by the processor 7201.

In some embodiments, terms such as interface circuit, interface, transceiver pin, transceiver and the like may be used interchangeably.

In some embodiments, the chip 7200 further includes one or more memories 7203 for storing instructions. Optionally, all or part of the memories 7203 may be located outside the chip 7200.

The present disclosure further provides a storage medium on which instructions are stored, which, when executed on the communication device 7100, cause the communication device 7100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure further provides a program product which, when executed by the communication device 7100, causes the communication device 7100 to perform any of the above methods. Optionally, the program product is a computer program product.

The present disclosure further provides a computer program that, when run on a computer, causes the computer to perform any of the above methods.

## Claims

1. A communication method, performed by a terminal, comprising:
receiving first information sent from a network device, wherein the first information is used to indicate the terminal to redirect from a terrestrial network to a non-terrestrial network.

2. The method according to claim 1, wherein the first information is carried by at least one of:
redirected carrier information;
system information; or
a radio resource control (RRC) message.

3. The method according to claim 1, wherein the first information further indicates related information of the non-terrestrial network.

4. The method according to claim 3, wherein the related information of the non-terrestrial network comprises at least one of:
satellite ephemeris information;
related information of timing advance (TA);
validity time information of satellite ephemeris information;
frequency information;
a cell identifier;
a satellite identifier;
antenna information; or
information indicating a service start time of a non-terrestrial network neighboring cell.

5. The method according to claim 1, further comprising:
obtaining satellite ephemeris information from system information; and
redirecting to the non-terrestrial network based on the satellite ephemeris information.

6. The method according to claim 4, further comprising at least one of:
redirecting to a corresponding cell based on the related information of the non-terrestrial network;
redirecting to a corresponding satellite based on the related information of the non-terrestrial network; or
redirecting to a corresponding frequency based on the related information of the non-terrestrial network.

7. The method according to claim 2, wherein the RRC message comprises any one of:
a narrowband Internet of Things RRC connection release message;
a narrowband Internet of Things RRC early data complete message;
a RRC connection release message; or
a RRC early data complete message.

8. The method according to claim 6, further comprising:
in response to a failure to redirect to a satellite or a cell, re-redirecting to another satellite or another cell on the frequency information of the non-terrestrial network.

9. A communication method, performed by a network device, comprising:
sending first information to a terminal, wherein the first information is used to indicate the terminal to redirect from a terrestrial network to a non-terrestrial network.

10. The method according to claim 9, wherein the first information is carried by at least one of:
redirected carrier information;
system information (SIB); or
a radio resource control (RRC) message.

11. The method according to claim 9, wherein the first information further indicates related information of the non-terrestrial network.

12. The method according to claim 11, wherein the related information of the non-terrestrial network comprises at least one of:
satellite ephemeris information;
related information of timing advance (TA);
validity time information of satellite ephemeris information;
frequency information;
a cell identifier;
a satellite identifier;
antenna information; or
information indicating a service start time of a non-terrestrial network neighboring cell.

13. The method according to claim 10, wherein the RRC message comprises any one of:
a narrowband Internet of Things RRC connection release message;
a narrowband Internet of Things RRC early data complete message;
a RRC connection release message; or
a RRC early data complete message.

14. A communication method, comprising:
sending, by a network device, first information to a terminal, wherein the first information is used to indicate the terminal to redirect from a terrestrial network to a non-terrestrial network; and
receiving, by the terminal, the first information.

15. A terminal, comprising:
a transceiver module configured to receive first information sent from a network device, wherein the first information is used to indicate the terminal to redirect from a terrestrial network to a non-terrestrial network.

16. A network device, comprising:
a transceiver module configured to send first information to a terminal, wherein the first information is used to indicate the terminal to redirect from a terrestrial network to a non-terrestrial network.

17. A terminal, comprising:
one or more processors,
wherein the one or more processors are configured to perform the communication method according to any one of claims 1 to 8.

18. A network device, comprising:
one or more processors,
wherein the one or more processors are configured to perform the communication method according to any one of claims 9 to 13.

19. A communication system, comprising:
a terminal configured to implement the communication method according to any one of claims 1 to 8; and
a network device configured to implement the communication method according to any one of claims 9 to 13.

20. A storage medium storing instructions that, when executed on a communication device, cause the communication device to perform the communication method according to any one of claims 1 to 8 or claims 9 to 13.

21. A program product, comprising a computer program that, when executed by a communication device, causes the communication device to perform the communication method according to any one of claims 1 to 8 or claims 9 to 13.
